# EUROPEAN PATENT APPLICATION

(11) **EP 4 750 135 A1**
(43) Date of publication of application: **27.05.2026**
(21) Application number: 24844697.3
(22) Date of filing: 19.07.2024
(51) Int. Cl.: H04W 24/10

(54) **INFORMATION TRANSMISSION METHOD AND APPARATUS, AND TERMINAL**

(30) Priority: 21.07.2023 CN 202310907047
(71) Applicant: Vivo Mobile Communication Co., Ltd., Dongguan, Guangdong 523863 (CN)
(72) Inventor: WANG, Chenxi, Dongguan, Guangdong 523863 (CN); WU, Hao, Dongguan, Guangdong 523863 (CN); SONG, Yang, Dongguan, Guangdong 523863 (CN)
(74) Representative: Conti, Marco
(86) International application number: PCT/CN2024/106294
(87) International publication number: WO 2025/021005

(57) **Abstract**

This application relates to the field of communication technologies, and discloses an information transmission method and apparatus, and a terminal. The information transmission method in embodiments of this application includes: A terminal obtains first information. The first information includes at least one piece of reporting configuration information and at least one piece of measurement configuration information. The terminal performs beam measurement on a measurement resource corresponding to target measurement configuration information, to obtain a first beam measurement result. The target measurement configuration information is one of the at least one piece of measurement configuration information associated with target reporting configuration information. The target reporting configuration information is one of the at least one piece of reporting configuration information. The terminal determines first beam report information when the first beam measurement result satisfies a reporting condition. The terminal performs beam reporting processing based on the first beam report information.

## Description

### CROSS-REFERENCE TO RELATED APPLICATIONS

This application claims priority to Chinese Patent Application No. 202310907047.5 filed on July 21, 2023, which is incorporated herein by reference in its entirety.

### TECHNICAL FIELD

This application relates to the field of communication technologies, and in particular, to an information transmission method and apparatus, and a terminal.

### BACKGROUND

With the development of large-scale antenna technologies and the expansion of high-speed mobile scenarios, a beam changes rapidly. To ensure that a network and a terminal track and update a beam in real time, the network needs to frequently trigger beam reporting, resulting in a problem of high reporting overheads.

### SUMMARY

Embodiments of this application provide an information transmission method and apparatus, and a terminal, which can solve a problem that an existing beam reporting solution has high reporting overheads.

According to a first aspect, an information transmission method is provided, including:
A terminal obtains first information, where the first information includes at least one piece of reporting configuration information and at least one piece of measurement configuration information.

The terminal performs beam measurement on a measurement resource corresponding to target measurement configuration information, to obtain a first beam measurement result, where the target measurement configuration information is one of the at least one piece of measurement configuration information associated with target reporting configuration information, and the target reporting configuration information is one of the at least one piece of reporting configuration information.

The terminal determines first beam report information when the first beam measurement result satisfies a reporting condition.

The terminal performs beam reporting processing based on the first beam report information.

The reporting condition includes at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, where M1 is a positive integer;
a quantity of times the first measurement result of the first RS in the second measurement resource set is greater than or equal to a fourth threshold is not less than M2 within a second preset time period, where M2 is a positive integer;
a quantity of times the first measurement result of the first RS in the first measurement resource set is less than or equal to the first measurement result of the first RS in the second measurement resource set is not less than M3 within a third preset time period, where M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, where
at least one of the first measurement resource set and the second measurement resource set is a measurement resource set in the target measurement configuration information.

According to a second aspect, an information transmission apparatus is provided, including:
a first obtaining module, configured to obtain first information, where the first information includes at least one piece of reporting configuration information and at least one piece of measurement configuration information;
a second obtaining module, configured to perform beam measurement on a measurement resource corresponding to target measurement configuration information, to obtain a first beam measurement result, where the target measurement configuration information is one of the at least one piece of measurement configuration information associated with target reporting configuration information, and the target reporting configuration information is one of the at least one piece of reporting configuration information;
a first determining module, configured to determine first beam report information when the first beam measurement result satisfies a reporting condition; and
a first processing module, configured to perform beam reporting processing based on the first beam report information.

The reporting condition includes at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, where M1 is a positive integer;
a quantity of times the first measurement result of the first RS in the second measurement resource set is greater than or equal to a fourth threshold is not less than M2 within a second preset time period, where M2 is a positive integer;
a quantity of times the first measurement result of the first RS in the first measurement resource set is less than or equal to the first measurement result of the first RS in the second measurement resource set is not less than M3 within a third preset time period, where M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, where
at least one of the first measurement resource set and the second measurement resource set is a measurement resource set in the target measurement configuration information.

According to a third aspect, a terminal is provided. The terminal includes a processor and a memory. The memory stores a program or an instruction executable in the processor. The program or the instruction, when executed by the processor, implements the steps of the method in the first aspect.

According to a fourth aspect, a terminal is provided, including a processor and a communication interface. The communication interface is configured to obtain first information. The first information includes at least one piece of reporting configuration information and at least one piece of measurement configuration information. The processor is configured to: perform beam measurement on a measurement resource corresponding to target measurement configuration information, to obtain a first beam measurement result, where the target measurement configuration information is one of the at least one piece of measurement configuration information associated with target reporting configuration information, and the target reporting configuration information is one of the at least one piece of reporting configuration information; determine first beam report information when the first beam measurement result satisfies a reporting condition; and perform beam reporting processing based on the first beam report information, where the reporting condition includes at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, where M1 is a positive integer;
a quantity of times the first measurement result of the first RS in the second measurement resource set is greater than or equal to a fourth threshold is not less than M2 within a second preset time period, where M2 is a positive integer;
a quantity of times the first measurement result of the first RS in the first measurement resource set is less than or equal to the first measurement result of the first RS in the second measurement resource set is not less than M3 within a third preset time period, where M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, where
at least one of the first measurement resource set and the second measurement resource set is a measurement resource set in the target measurement configuration information.

According to a fifth aspect, a readable storage medium is provided. The readable storage medium stores a program or an instruction. The program or the instruction, when executed by a processor, implements the steps of the method described in the first aspect.

According to a sixth aspect, a chip is provided. The chip includes a processor and a communication interface. The communication interface is coupled to the processor. The processor is configured to execute a program or an instruction, to implement the method in the first aspect.

According to a seventh aspect, a computer program/program product is provided. The computer program/program product is stored in a storage medium. The computer program/program product is executed by at least one processor, to implement the steps of the method in the first aspect.

In embodiments of this application, the terminal obtains the first information. The first information includes at least one piece of reporting configuration information and at least one piece of measurement configuration information. The terminal performs beam measurement on the measurement resource corresponding to the target measurement configuration information, to obtain the first beam measurement result. The terminal determines first beam report information when the first beam measurement result satisfies the reporting condition. The terminal performs beam reporting processing based on the first beam report information. Through the foregoing solution, the terminal determines the first beam report information and performs beam reporting processing when the first beam measurement result satisfies the reporting condition. In other words, the terminal triggers beam reporting processing, and does not need to periodically report the beam quality frequently, thereby greatly reducing beam reporting overheads while ensuring real-time tracking and updating of the beam.

### BRIEF DESCRIPTION OF THE DRAWINGS

FIG. 1 is a structural diagram of a communication system to which an embodiment of this application may be applied;
FIG. 2 is a schematic flowchart of an information transmission method according to an embodiment of this application;
FIG. 3 is a schematic diagram of a downlink beam training triggered by a condition according to an embodiment of this application;
FIG. 4 is a schematic diagram of an uplink beam training triggered by a condition according to an embodiment of this application;
FIG. 5 is a schematic diagram of modules of an information transmission apparatus according to an embodiment of this application;
FIG. 6 is a structural block diagram of a communication device according to an embodiment of this application; and
FIG. 7 is a structural block diagram of a terminal according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this case may be transposed where appropriate, so that embodiments of this application may be implemented in a sequence other than those illustrated or described herein. In addition, objects defined by "first" and "second" are generally of the same class and do not limit a quantity of objects. For example, one first object may be arranged, or a plurality of objects may be arranged. In addition, "or" in this application indicates at least one of connected objects. For example, "A or B" encompasses three solutions: solution I: A is included but B is not included; solution II: B is included but A is not included; and solution III: both A and B are included. A character "/" generally indicates an "or" relationship between associated objects.

A term "indication" in this application may be a direct indication (or an explicit indication) or an indirect indication (or an implicit indication). The direct instruction may be understood as that a sending party clearly informs a receiving party of specific information, an operation to be performed, or a request result in the sent instruction. The indirect indication may be understood as that the receiving party determines corresponding information based on an indication sent by the sending party, or makes a determination and determines, based on a determining result, an operation that needs to be performed or a request result.

It should be noted that, technologies described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. However, the technologies may also be applied to systems other than the NR system, such as a 6^{th} Generation (6th Generation, 6G) communication system.

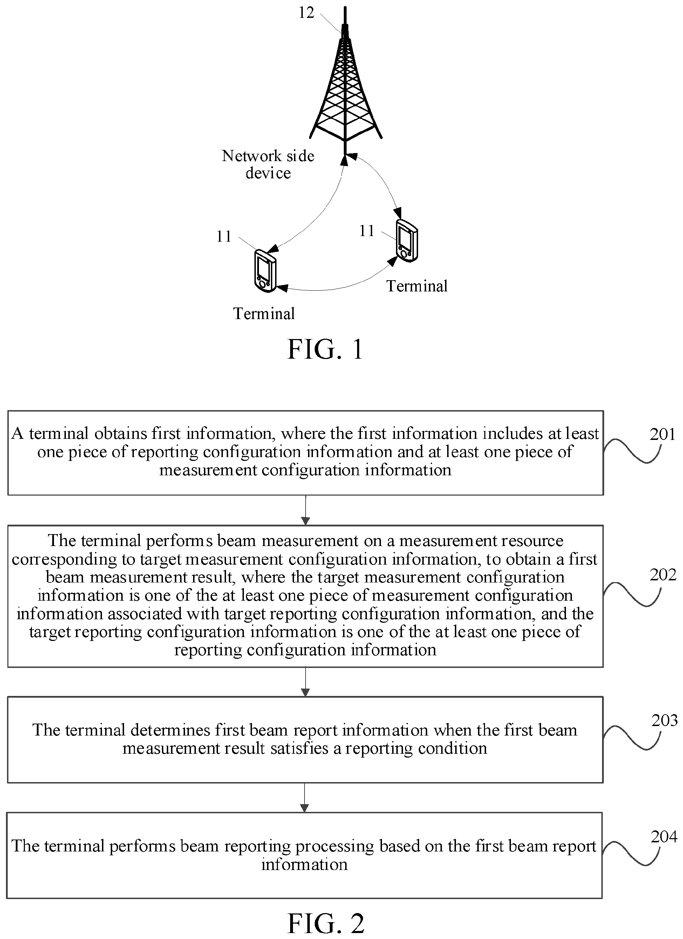

FIG. 1 is a block diagram of a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes: a smart watch, a smart bracelet, a smart headset, smart glasses, smart jewelry (a smart wristlet, a smart chain bracelet, a smart ring, a smart necklace, a smart ankle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

To enable a technical person of the art to better understand embodiments of this application, the following description is provided first.

### (1) Beam measurement

Analog beam forming is transmitted in a full bandwidth, and an array element on a panel of each high-frequency antenna array in each polarization direction can only send an analog beam in a time division multiplexing manner. A forming weight of the analog beam is implemented by adjusting a parameter of a device such as a radio frequency front-end phase shifter.

In the related art, an analog beam forming vector is usually trained in a polling manner. In other words, an array element on each antenna panel in each polarization direction sequentially sends a training signal (namely, a candidate forming vector) within an agreed time in a time division multiplexing manner. After measurement, a terminal feeds back a beam report, so that a network side uses the training signal to transmit an analog beam in a next transmission service.

The current standards only support performing beam measurement through a channel state information reference signal (Channel State Information Reference Signal, CSI-RS) or a synchronization signal and PBCH block (Synchronization Signal and PBCH Block, SSB), and the CSI-RS used for beam measurement has only 1 port to 2 ports. The SSB is a periodic reference signal. However, the CSI-RS used for beam measurement may be periodic, semi-persistent, or aperiodic.

The beam measurement includes Layer 1 (Layer 1, L1) beam measurement and Layer 3 (Layer 3, L3) beam measurement. The L1 beam measurement is only performed on a serving cell at Releases 15 and 16. Release 15 supports only L1 reference signal received power (Layer 1 Reference Signal Received Power, L1-RSRP) measurement. Release 16 introduces an L1 signal-to-noise and interference ratio (Layer 1 Signal-to-noise and Interference Ratio, L1-SINR), and considers inter-cell interference or inter-user interference into the beam measurement. The L1 beam measurement on a neighboring cell that have the same frequency as a current serving cell and is synchronous with a current serving cell is supported under the Release 17 cross-cell beam management and a cross-cell multi-sending and receiving node project. The L1 beam measurement on an asynchronous inter-frequency neighboring cell is supported under a Release 18 mobile enhancement project. Both currently support only SSB-based L1-RSRP measurement. After performing L1 beam measurement based on a measurement resource configured by the network, the terminal selects, based on the measurement result, some beams for reporting.

### (2) Beam reporting

A report quantity of L1 beam measurement supported in the current standards is L1-RSRP/L1 reference signal received quality (Layer 1 Reference Signal Received Quality, L1-RSRQ)/L1-SINR, and beam reporting manners include a group-based manner and a non-group-based manner. For the non-group-based beam reporting, the terminal selects, based on a measurement quantity, at most 4 beams from all measurement resources configured at the network side for reporting. For the group-based beam reporting, in Release 15/16, the terminal selects a pair of beams that can be simultaneously received by a user equipment (User Equipment, UE, namely. a terminal) for reporting based on the measurement result.

In an existing protocol, if a report quantity (report quantity) field in a higher layer parameter CSI report config (CSI Report Config) is configured as "cri-RSRP", "cri-SINR", "ssb-Index-SINR", or "ssb-Index-RSRP", the current CSI report is a beam report. Moreover, when a group-based beam reporting (groupBasedBeamReporting) field is "enabled (enabled)", the UE can only report a pair of beams, including two channel measurement resource (Channel Measurement Resource, CMR) identifiers (CSI-RS resource indicator (CSI-RS Resource Indicator, CRI) or SSB resource indicator (SSB Resource Indicator, SSB-RI)) and a corresponding L1-RSRP/L1-SINR value thereof. When the groupBasedBeamReporting domain is "disabled (disabled)", the UE may report CMR identifiers corresponding to 4 beams and corresponding L1-RSRP thereof. When a quantity of reported beams is greater than 1, the remaining L1-RSRP/L1-SINR values and the maximum value are differentially reported except for a maximum value of L1-RSRP/L1-SINR.

In the existing beam reporting, the terminal often detects the beam quality through beam measurement and/or reporting triggered by the network side, and the network side configures, activates, and indicates the beam based on the beam measurement result reported by the terminal. In an FR2 scenario, with the development of large-scale antenna technologies and the expansion of high-speed mobile scenarios, a beam changes rapidly. To ensure that the network and the terminal track and update a beam in real time, the network needs to dynamically trigger the beam reporting frequently, or the network configures the terminal with frequent periodic beam reporting, resulting in a problem of high reporting overheads and high signaling overheads (for aperiodic beam reporting).

An information transmission method provided in embodiments of this application is described below in detail through some embodiments and application scenarios thereof with reference to the accompanying drawings.

As shown in FIG. 2, an embodiment of this application provides an information transmission method, including the following steps.

Step 201: A terminal obtains first information, where the first information includes at least one piece of reporting configuration information and at least one piece of measurement configuration information.

Optionally, the terminal obtains the first information sent by a network side device (for example, a base station).

The foregoing measurement configuration information includes N measurement resource sets, N being a positive integer. A reference signal (Reference Signal, RS) in at least one measurement resource set of the N measurement resource sets is explicitly or implicitly configured by a network, or is determined by the terminal based on a protocol.

Step 202: The terminal performs beam measurement on a measurement resource corresponding to target measurement configuration information, to obtain a first beam measurement result, where the target measurement configuration information is one of the at least one piece of measurement configuration information associated with target reporting configuration information, and the target reporting configuration information is one of the at least one piece of reporting configuration information.

Step 203: The terminal determines first beam report information when the first beam measurement result satisfies a reporting condition.

In this embodiment of this application, the terminal performs beam measurement on the measurement resource corresponding to the target measurement configuration information, to obtain a first beam measurement result. If the first beam measurement result satisfies a reporting condition, a beam reporting process may be triggered.

The terminal determines the first beam report information based on whether the first beam measurement reporting result satisfies the reporting condition.

The reporting condition includes at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, where M1 is a positive integer;
a quantity of times the first measurement result of the first RS in the second measurement resource set is greater than or equal to a fourth threshold is not less than M2 within a second preset time period, where M2 is a positive integer;
a quantity of times the first measurement result of the first RS in the first measurement resource set is less than or equal to the first measurement result of the first RS in the second measurement resource set is not less than M3 within a third preset time period, where M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, where
at least one of the first measurement resource set and the second measurement resource set is a measurement resource set in the target measurement configuration information.

It should be noted that in this embodiment of this application, values of the first threshold, the third threshold, and the fifth threshold may be the same or different, and values of the second threshold, the fourth threshold, and the sixth threshold may be the same or different. The foregoing thresholds may be configured by a network, or stipulated through a protocol. The first preset time period, the second preset time period, the third preset time period, the fourth preset time period, the fifth preset time period, and the sixth preset time period may be the same or may be different in duration, and specific values thereof may be configured by the network, or stipulated through the protocol.

Optionally, the first measurement resource set is a resource set that is currently used or to be used in the future, and the second measurement resource set is a candidate beam set.

Step 204: The terminal performs beam reporting processing based on the first beam report information.

Optionally, the beam reporting processing in this embodiment of this application may be beam reporting processing for a frequency range 2 (Frequency Range 2, FR2) scenario.

In embodiments of this application, the terminal obtains the first information. The first information includes at least one piece of reporting configuration information and at least one piece of measurement configuration information. The terminal performs beam measurement on the measurement resource corresponding to the target measurement configuration information, to obtain the first beam measurement result. The terminal determines first beam report information when the first beam measurement result satisfies the reporting condition. The terminal performs beam reporting processing based on the first beam report information. Through the foregoing solution, the terminal determines the first beam report information and performs beam reporting processing when the first beam measurement result satisfies the reporting condition. In other words, the terminal triggers beam reporting processing, and does not need to periodically report the beam quality frequently, thereby greatly reducing beam reporting overheads while ensuring real-time tracking and updating of the beam.

Optionally, the first RS includes at least one of the following:
K RSs in the measurement resource set that have highest or lowest first measurement results, where K is a positive integer;
P RSs in the measurement resource set that have minimum or maximum indexes, where P is a positive integer; or
all of the RSs in the measurement resource set.

Optionally, the first measurement result includes at least one of the following:
a maximum value or a minimum value of a measurement quantity of the first RS within a seventh preset time period; or
a linear average value of the measurement quantity of the first RS within the seventh preset time period, where the linear average value includes but is not limited to a linear average value in a time domain or a space domain.

Optionally, the measurement quantity includes at least one of the following:
L1-RSRP;
L1-SINR;
a CSI parameter, for example, a channel quality indicator (Channel Quality Indicator, CQI), a rank indicator (Rank Indicator, RI), or the like; or
a block error rate (Block Error Rate, BLER).

Based on the description of the first measurement result and the description of the first RS above, the reporting condition in this embodiment of this application may specifically include at least one of the following.
Condition 1: A measurement result of an RS having a best measurement result in the first measurement resource set is less than a first value, and the first threshold includes the first value;
Condition 2: A measurement result of an RS having a worst measurement result in the first measurement resource set is less than a second value, and the first threshold includes the second value;
Condition 3: Within a fourth preset time period, measurement results of all RSs in the first measurement resource set are always less than a third value, and the fifth threshold includes the third value;
Condition 4: Within a fourth preset time period, linear average values of measurement results of all RSs in the first measurement resource set are always less than a fourth value, the fifth threshold includes the fourth value, and the linear average values includes at least one linear average value in a time domain and a space domain;
Condition 5: No third RS exists in the first measurement resource set, the third RS is an RS whose quantity of times the measurement result is greater than the fifth value exceeds m (m≤M) within a first preset time period, M being the quantity of measurement times of the RS in the first measurement resource set within the preset time period, and the third threshold includes the fifth value;
Condition 6: At least one fourth RS exists in the first measurement resource set, the fourth RS is an RS whose quantity of times the measurement result is less than a sixth value within a first preset time period exceeds M1 (M1≤Q), Q being the quantity of measurement times of the RS in the first measurement resource set within the first preset time period, and the third threshold includes the sixth value;
Condition 7: Within a first preset time period, the quantity of RS occasion resources whose measurement result is greater than a seventh value in the first measurement resource set is less than x (x≤X), X being the quantity of RS resources corresponding to the first measurement resource set within the first preset time period, and the third threshold includes the seventh value;
Condition 8: Within a first preset time period, the quantity of RS resources whose measurement result is less than an eighth value in the first measurement resource set is not less than M1 (M1≤Y), Y being the quantity of RS resources corresponding to the first measurement resource set within the preset time period, and the third threshold includes the eighth value;
Condition 9: A measurement result of an RS having a best measurement result in the second measurement resource set is greater than a ninth value, and the second threshold includes the ninth value;
Condition 10: A measurement result of an RS having a worst measurement result in the second measurement resource set is greater than a tenth value, and the second threshold includes the tenth value;
Condition 11: Within a fifth preset time period, measurement results of all RSs in the second measurement resource set are always greater than an eleventh value, and the sixth threshold includes the eleventh value;
Condition 12: Within a fifth preset time period, linear average values of measurement results of all RSs in the second measurement resource set are always greater than a twelfth value, the linear average values include at least one linear average value in a time domain and a space domain, and the sixth threshold includes the twelfth value;
Condition 13: No fifth RS exists in the second measurement resource set, the fifth RS is an RS whose quantity of times the measurement result is less than a thirteenth value within a second preset time period exceeds s (s≤S), S being the quantity of measurement times of the RS in the second measurement resource set within the preset time period, and optionally, the fourth threshold includes the thirteenth value;
Condition 14: At least one sixth RS exists in the second measurement resource set, the sixth RS being an RS whose quantity of times the measurement result is higher than a fourteenth value within a second preset time period exceeds M2 (M2≤T), T being the quantity of measurement times of the RS in the second measurement resource set within the preset time period, and the fourth threshold includes the fourteenth value;
Condition 15: Within a second preset time period, the quantity of RS resources whose measurement result is greater than a fifteenth value in the second measurement resource set is greater than M2 (M2≤I), I being the quantity of RS resources corresponding to the second measurement resource set within the preset time period, and the fourth threshold includes the fifteenth value;
Condition 16: Within a second preset time period, the quantity of RS resources whose measurement result is less than a sixteenth value in the second measurement resource set is less than j (j≤J), J being the quantity of RS resources corresponding to the second measurement resource set within the preset time period, and optionally, the fourth threshold includes the sixteenth value;
Condition 17: A measurement result of an RS having a best measurement result in the first measurement resource set is less than a measurement result of an RS having a worst measurement result in the second measurement resource set;
Condition 18: Within a third preset time period, measurement results of all RSs in the first measurement resource set are always less than measurement results of all RSs in the second measurement resource set;
Condition 19: Within a third preset time period, linear average values of measurement results of all RSs in the first measurement resource set are always less than linear average values of measurement results of all RSs in the second measurement resource set, and the linear average values includes at least one linear average value in a time domain and a space domain;
Condition 20: At least one fifth RS exists in the first measurement resource set, at least one sixth RS exists in the second measurement resource set, and the fifth RS and the sixth RS satisfy: within the sixth preset time period, the quantity of times measurement results of the fifth RS are less than measurement results of the sixth RS is not less than M3 (M3<P), P being a smaller value of the quantity of measurement times of the fifth RS and the quantity of measurement times of the sixth RS within the sixth preset time period; or
Condition 21: The terminal finds, through a first operation, that a first beam is not included in the first measurement resource set, the first operation includes prediction, perception, and the like, and the first beam is a beam having a best beam quality or a beam which is to be used by the terminal at a future moment.

It should be noted that the preset time period may be different or the same in different conditions, which is specifically configured by the network or stipulated through the protocol. The first threshold to the sixth threshold may be different or the same, which are specifically configured by a network or stipulated through a protocol. The first measurement resource set may be understood as a beam set that is being used or tracked by the terminal. The quantity of RSs and specific RSs in the first measurement resource set are configured by the network or stipulated through the protocol. Optionally, the first measurement resource set is associated with a current serving cell, or measurement resources in the first measurement resource set are all associated with a current serving cell. The second measurement resource set may be understood as a candidate beam set, and the quantity of RSs and specific RSs in the second measurement resource set are configured by the network or stipulated through the protocol. The second measurement resource set is associated with a neighboring cell, or a measurement resource in the second measurement resource set is associated with a neighboring cell.

Optionally, the first measurement resource set and the second measurement resource set each include at least one RS, and the RS in the first measurement resource set and the second measurement resource set is determined through at least one of the following:
a quasi co-location (Quasi Co-Location, QCL) source reference signal of a transmission configuration indicator (Transmission Configuration Indicator, TCI) state (state) that is activated or indicated by a network;
a QCL source reference signal of a demodulation reference signal of a physical downlink control channel (Physical Downlink Control Channel, PDCCH);
an RS explicitly configured by the network; or
an RS stipulated through a protocol or an RS determined through a default rule.

In this embodiment of this application, the RS stipulated through the protocol or the RS determined through the default rule includes, but is not limited to, the RS corresponding to a beam used by the terminal at n moments in the future.

Optionally, the RS in the first measurement resource set and the RS in the second measurement resource set are associated with different cells; or
the first measurement resource set and the second measurement resource set are associated with different cells.

Optionally, the case in which the first measurement resource set and the second measurement resource set are associated with different cells is applied to a scenario of inter-cell (Inter-cell) cooperation or mobile switching (mobility).

Optionally, the first beam report information includes at least one of the following:
first indication information, where the first indication information is used to indicate whether to perform beam measurement or beam switching;
second indication information, where the second indication information is used to indicate a reporting condition that needs to be satisfied to trigger reporting of a first beam report, and the first beam report is a beam report corresponding to the first beam report information; and the second indication information is reported only when the quantity of reporting conditions configured in the target reporting configuration information is greater than 1;
at least one beam measurement result, where each beam measurement result includes a measurement quantity and a measurement resource index, and the quantity of the beam measurement results is configured by the network or indicated by the terminal;
capability information of the terminal, where the capability information includes whether the terminal supports a fine received beam or a fine transmitted beam (fine Rx/Tx beam);
third indication information, where the third indication information is used to indicate beam range information; or
a semi-persistent channel state information CSI reporting configuration identifier.

In this embodiment of this application, the reporting of the CSI reporting configuration identifier can instruct the network to deactivate corresponding semi-persistent CSI reporting, thereby reducing signaling overheads for deactivating downlink control information (Downlink Control Information, DCI) of semi-persistent CSI reporting.

Optionally, that the terminal performs beam reporting processing based on the first beam report information includes one of the following:
mapping the first beam report information to a first uplink resource for transmission; or
reporting the first beam report information to a media access control (Medium Access Control, MAC) layer, assembling and generating, by the MAC layer, a first media access control (MAC) control element (Control Element, CE), mapping the first MAC CE to a first transmission channel and generate a MAC protocol data unit PDU (Protocol Data Unit, PDU), and then mapping the MAC PDU to the first uplink resource for transmission.

Optionally, the first uplink resource includes at least one of the following:
a physical uplink control channel (Physical Uplink Control Channel, PUCCH) scheduling request (Scheduling Request, SR) dedicated to triggering and reporting by the terminal;
a PUCCH;
a physical uplink shared channel (Physical Uplink Shared Channel, PUSCH);
an available uplink scheduling (UL grant), for example, a latest available uplink scheduling;
a configured grant (Configured grant) associated with a target RS, where the target RS is an RS corresponding to a best first measurement result; or
a random access channel (Random Access Channel, RACH), including but not limited to an MsgA, an Msg1, and an Msg3.

Optionally, the method in this embodiment of this application further includes:
sending fourth indication information on a second uplink resource, where the fourth indication information is used to indicate the first uplink resource.

Optionally, the second uplink resource includes, but is not limited to, at least one of the Msg1, the MsgA, and the Msg3 in a RACH process, and is dedicated to triggering, by the UE, reporting of a PUCCH SR.

Optionally, the fourth indication information includes at least one of the following:
uplink resource indication identifier information;
time domain indication information, where the time domain indication information is used to indicate time domain information of the first uplink resource; or
frequency domain indication information, where the frequency domain indication information is used to indicate frequency domain information of the first uplink resource.

In this embodiment of this application, a group of uplink resources may be configured on a network side, and the foregoing uplink resource indicator identifier information may be used for indicating index information of a first uplink resource in the group of uplink resources.

Optionally, the mapping the first beam report information to a first uplink resource for transmission includes:
mapping, to the first uplink resources for transmission based on a first priority rule, first beam report information associated with a plurality of pieces of target reporting configuration information when a first beam measurement result corresponding to a measurement resource in measurement configuration information associated with the plurality of pieces of target reporting configuration information satisfies a reporting condition, and the first uplink resources indicated in the plurality of pieces of target reporting configuration information overlap, where
the first priority rule is related to at least one of the following:
   a configuration identifier of each of the pieces of target reporting configuration information;
   a reporting condition configured in the target reporting configuration information;
   reporting content configured in the target reporting configuration information; or
   an identifier of a serving cell in which the target reporting configuration is located.

In this embodiment of this application, the first priority rule is determined based on at least one of the foregoing items. In other words, a priority of a beam report corresponding to the target reporting configuration information is determined. Based on the priority of the beam report corresponding to the target reporting configuration information, the first beam report information associated with a plurality of pieces of target reporting configuration information is mapped to the first uplink resource for transmission.

Specifically, first beam report information associated with target reporting configuration information having a relatively high reporting priority is mapped to a first uplink resource for transmission, and then first beam report information associated with target reporting configuration information having a relatively low reporting priority is mapped to the first uplink resource for transmission.

For example, a smaller configuration identifier of target reporting configuration information indicates a higher priority. Therefore, when resource mapping is performed, first beam report information associated with target reporting configuration information having a smaller configuration identifier is mapped.

A smaller index of a reporting condition configured in the target reporting configuration information indicates a higher reporting priority corresponding to the target configuration information.

The target reporting configuration information including the beam measurement result corresponds to a highest reporting priority, the target reporting configuration information including the beam measurement or the beam switching indication information corresponds to a second highest reporting priority, and the target reporting configuration information including another reporting content (such as a UE capability) corresponds to a third highest reporting priority.

A smaller index of a serving cell corresponding to the target reporting configuration information indicates a higher reporting priority corresponding to the target reporting configuration information.

Optionally, mapping the first MAC CE to a first transmission channel and generating a MAC PDU includes:
mapping the first MAC CE to the first transmission channel and generating the MAC PDU based on a second priority rule, where
the second priority rule includes at least one of the following:
   the first MAC CE has a lower priority than a MAC CE (MAC CE for C-RNTI) carrying a cell radio network temporary identifier (Cell RNTI, C-RNTI); the first MAC CE has a lower priority than data transmitted on an uplink control channel (Uplink Control Channel, UL-CCH);
   the first MAC CE has a higher priority than a MAC CE for side link configured grant confirmation; or
   a priority of the first MAC CE is not lower than a priority of a second MAC CE, and the second MAC CE includes at least one of a MAC CE for beam failure recovery, a MAC CE for configured grant confirmation, or a MAC CE for multiple entry configured grant confirmation (MAC CE for Multiple Entry Configured Grant Confirmation).

In this embodiment of this application, data having a higher priority is first mapped to the first transmission channel, and data having a lower priority is mapped to the first transmission channel based on the foregoing second priority rule.

In addition, when the priority of the first MAC CE is the same as the priority of the second MAC CE, the first MAC CE or the second MAC CE may be mapped to the first transport channel based on the terminal.

In an example, when the measurement result corresponding to the measurement resource associated with the at least one piece of target reporting configuration information satisfies the reporting condition and triggers reporting, the terminal reports the first beam report information to the MAC layer. The MAC layer assemblies and generate the first beam report information to the first MAC CE for triggering and reporting by the UE. The first MAC CE includes the following content:
whether bit mapping indication information triggered and reported by the UE occurs in a serving cell, where a quantity of bits of the indication information is less than or equal to a quantity of cells in a current cell group, for example, 8 or 32; when an i^{th} bit is 1, it indicates that reporting triggered by a UE in a cell having a serving cell index of i occurs, and a field including a target information field corresponding to the serving cell having the serving cell index of i exists in the MAC CE. Otherwise, it indicates that reporting triggered by a UE in a cell having a serving cell index of i does not occur, and a field including a target information field corresponding to the serving cell having the serving cell index of i is default in the MAC CE; or
a target information field.

The target information field includes at least one of the following:
First item: A target reporting configuration information identifier (Optionally, when the first serving cell includes at least two pieces of target reporting configuration information, the terminal needs to report the information);
Second item: Beam measurement/switching indication information;
Third item: Indication information of the condition that triggers reporting (reporting is performed only when the quantity of reporting conditions (or triggering conditions) configured in the target reporting configuration information is greater than 1);
Fourth item: n beam measurement results, including at least one of a measurement quantity, a measurement resource index, and a cell identifier to which a measurement resource belongs, or a value of n being configured by a network or indicated by the UE, where
that the UE indicates a value of n means that the terminal selects a beam satisfying a condition for reporting, for example, a beam whose measurement result is greater than a threshold. Therefore, the value of n needs to be reported; and
the n beam measurement results include at least one of n measurement resource indexes and corresponding measurement quantities, or the n measurement quantities are reported as absolute measurement quantities or relative measurement quantities (namely, differential reporting).

If reporting is performed in a form of a difference, the difference form is one of a first-level difference and a two-level difference.

The first-level difference refers to performing difference by using a first object as a unit, absolute reporting is performed on a largest measurement quantity in all reported measurement results associated with the first object, and difference reporting is performed on remaining measurement quantities based on the largest measurement quantity, where the first object is a beam report or a serving cell.

The two-level difference refers to performing another difference on the maximum measurement quantities of all first objects under the second object based on the first-level difference. In other words, a maximum measurement quantity from respective maximum measurement quantities of all first objects under the second object is selected for absolute reporting, and the maximum measurement quantities of the remaining first objects are reported after difference is performed based on the maximum measurement quantity, where the second object is a cell group or a serving cell.

If reporting is performed in a form of a difference, an additional bit needs to be introduced to indicate a position of the maximum measurement quantity in the first object and a position of the maximum measurement quantity in the second object;
Fifth item: Reporting of a UE capability includes, but is not limited to whether the UE supports a fine Rx/Tx beam;
Sixth item: Related information indicating a beam range; or
Seventh item: A semi-persistent CSI reporting configuration identifier.

Optionally, that the terminal performs beam reporting processing based on the first beam report information includes:
The terminal performs, based on a preset rule, beam reporting processing when the terminal is configured with first beam reporting and second beam reporting and a first uplink resource overlaps with a third uplink resource, where the first beam reporting is beam reporting triggered based on the reporting condition, and the second beam reporting is periodic, semi-persistent, or aperiodic beam reporting configured or triggered by a network.

The preset rule includes at least one of the following:
the terminal reports the first beam report information or second beam report information when the first beam report information is the same as the second beam report information, and the first beam report information is reported through uplink control information (Uplink Control Information, UCI);
the terminal reports the second beam report information, or the terminal reports the first beam report information and the second beam report information when the first beam report information is the same as the second beam report information, and the first beam report information is reported through the MAC CE;
the terminal reports, based on a preset priority rule, third beam report information when the first beam report information is different from the second beam report information, and the first beam report information is reported through the uplink control information UCI, where the third beam report information is one of the first beam report information and the second beam report information that has a higher priority; or
the terminal reports the first beam report information and the second beam report information when the first beam report information is different from the second beam report information, and the first beam report information is reported through the MAC CE, where
the first beam report information is beam report information corresponding to the first beam reporting, the second beam report information is beam report information corresponding to the second beam reporting, the first uplink resource is an uplink resource for transmitting the first beam report information, and the third uplink resource is an uplink resource for transmission of the second beam report information.

Optionally, the method in this embodiment of this application further includes:
determining a start position of a CSI processing unit (CSI Processing Unit, CPU) occupation time corresponding to the first beam report based on at least one of the following:
a first symbol of a reference signal with an earliest time domain resource among all measurement resources corresponding to the target measurement configuration information associated with the first beam report; or
the first symbol of the reference signal with the earliest time domain resource among the measurement resources corresponding to the target measurement configuration information associated with the first beam report, where the measurement resource corresponding to the target measurement configuration information is a measurement resource for candidate beam detection; and
the first beam report is a beam report corresponding to the first beam report information.

Optionally, after the terminal performs beam reporting processing based on the first beam report information, the method further includes:
The terminal performs beam measurement on a second RS to obtain a second beam measurement result, and reports the second beam measurement result on a fourth uplink resource; and
sends a sounding reference signal (Sounding Reference Signal, SRS) on a fifth uplink resource.

In this embodiment of this application, the time-frequency domain resource of the foregoing second RS, the time-frequency domain resource of the foregoing SRS, the fourth uplink resource, and the fifth uplink resource are pre-configured by the network or stipulated through the protocol. For example, the terminal measures Y1 RSs after X1ms/slot/symbol after the last symbol of the uplink channel carrying the first beam report information, time intervals between the Y1 RSs may be the same or different, and specific values are configured by the network or stipulated through the protocol, and are transmitted on closest uplink resources of Z ms/slot/symbol. Alternatively, the terminal sends Y2 SRSs after X2 ms/slot/symbol after the last symbol of the uplink channel carrying the first beam report information, time intervals between the Y2 SRSs may be the same or different, and specific values are configured by the network or stipulated through the protocol.

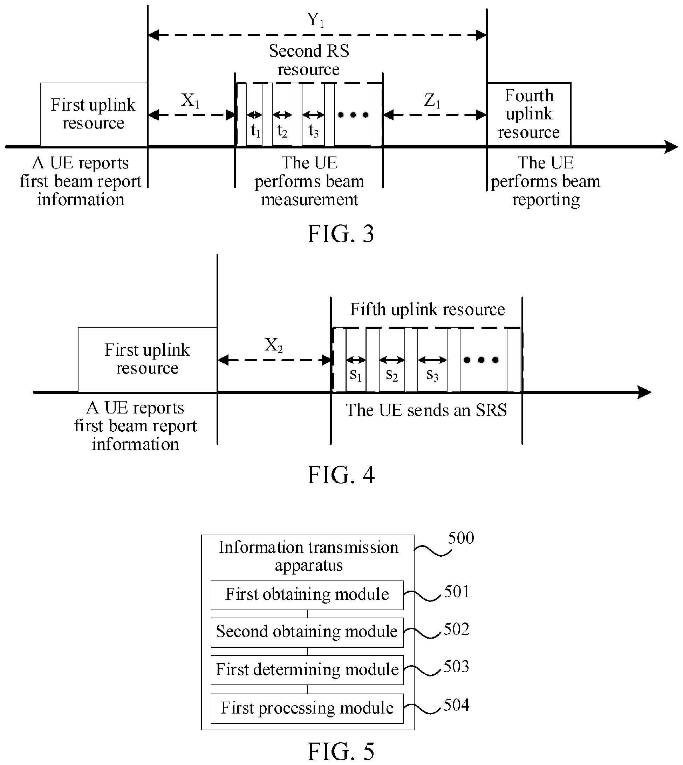

As shown in FIG. 3, after reporting the first beam report information on the first uplink resource, the terminal performs beam measurement on the second RS, and performs reporting on the fourth uplink resource. The first beam report information includes at least one of indication information of a beam measurement or related information indicating a beam range.

A time-frequency domain of the second RS and a time-frequency position of the fourth uplink resource are stipulated through the protocol, and do not need to be further indicated or triggered by the network. As shown in FIG. 3, the terminal starts measurement from an earliest RS occasion (occasion) (namely, a first symbol/slot after X1 symbol/slot/ms after a last symbol of the target uplink resource) of the second RS, and the fourth uplink resource used for beam reporting starts from the first symbol/slot of Y1 symbol/slot/ms after the last symbol of the first uplink resource, or starts from the first symbol/slot of Z1 symbol/slot/ms after the last symbol of the last RS occasion of the second RS. Values of X1, Y1, and Z1 are configured by the network or stipulated through the protocol. Time intervals (t1, t2, t3) between the second RS resources may be the same or different, and specific values are configured by the network or stipulated through the protocol. When measuring the second RS resource, the terminal determines a QCL-type D characteristic of the second RS, namely, determines a received beam of the UE based on at least one of the following manners:
based on a TCI state of the second RS resource configured by the network side or agreed on by the protocol;
based on a transmission configuration indicator (Transmission Configuration Indicator, TCI) state (state) or a received beam (Rx beam) corresponding to an RS having a best measurement result in the target information;
based on the beam range indication information in the target information;
based on a synchronization signal and PBCH block (Synchronization Signal and PBCH Block, SSB) at an initial access; or
based on an SSB or a CSI reference signal (CSI Reference Signal, CSI-RS) corresponding to one physical random access channel (Physical Random Access Channel, PRACH) transmission.

In the foregoing solution of embodiments of this application, the terminal obtains the first information. The first information includes at least one piece of reporting configuration information and at least one piece of measurement configuration information. The terminal performs beam measurement on the measurement resource corresponding to the target measurement configuration information, to obtain the first beam measurement result. The terminal determines first beam report information when the first beam measurement result satisfies the reporting condition. The terminal performs beam reporting processing based on the first beam report information. Through the foregoing solution, the terminal determines the first beam report information and performs beam reporting processing when the first beam measurement result satisfies the reporting condition. In other words, the terminal triggers beam reporting processing, and does not need to periodically report the beam quality frequently, thereby greatly reducing beam reporting overheads while ensuring real-time tracking and updating of the beam.

The information transmission method provided in embodiments of this application may be performed by an information transmission apparatus. In embodiments of this application, the information transmission apparatus provided in embodiments of this application is described by using an example in which the information transmission apparatus performs the information transmission method.

As shown in FIG. 5, an embodiment of this application provides an information transmission apparatus 500, including:
a first obtaining module 501, configured to obtain first information, where the first information includes at least one piece of reporting configuration information and at least one piece of measurement configuration information;
a second obtaining module 502, configured to perform beam measurement on a measurement resource corresponding to target measurement configuration information, to obtain a first beam measurement result, where the target measurement configuration information is one of the at least one piece of measurement configuration information associated with target reporting configuration information, and the target reporting configuration information is one of the at least one piece of reporting configuration information;
a first determining module 503, configured to determine first beam report information when the first beam measurement result satisfies a reporting condition; and
a first processing module 504, configured to perform beam reporting processing based on the first beam report information.

The reporting condition includes at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, where M1 is a positive integer;
a quantity of times the first measurement result of the first RS in the second measurement resource set is greater than or equal to a fourth threshold is not less than M2 within a second preset time period, where M2 is a positive integer;
a quantity of times the first measurement result of the first RS in the first measurement resource set is less than or equal to the first measurement result of the first RS in the second measurement resource set is not less than M3 within a third preset time period, where M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, where
at least one of the first measurement resource set and the second measurement resource set is a measurement resource set in the target measurement configuration information.

Optionally, the first measurement resource set and the second measurement resource set each include at least one RS, and the RS in the first measurement resource set and the second measurement resource set is determined through at least one of the following:
a quasi co-location QCL source reference signal of a transmission configuration indicator TCI state that is activated or indicated by a network;
a QCL source reference signal of a demodulation reference signal of a physical downlink control channel;
an RS explicitly configured by the network; or
an RS stipulated through a protocol or an RS determined through a default rule.

Optionally, the RS in the first measurement resource set and the RS in the second measurement resource set are associated with different cells; or
the first measurement resource set and the second measurement resource set are associated with different cells.

Optionally, the first RS includes at least one of the following:
K RSs in the measurement resource set that have highest or lowest first measurement results, where K is a positive integer;
P RSs in the measurement resource set that have minimum or maximum indexes, where P is a positive integer; or
all of the RSs in the measurement resource set.

Optionally, the first measurement result includes at least one of the following:
a maximum value or a minimum value of a measurement quantity of the first RS within a seventh preset time period; or
a linear average value of the measurement quantity of the first RS within the seventh preset time period.

Optionally, the first beam report information includes at least one of the following:
first indication information, where the first indication information is used to indicate whether to perform beam measurement or beam switching;
second indication information, where the second indication information is used to indicate a reporting condition that needs to be satisfied to trigger reporting of a first beam report, and the first beam report is a beam report corresponding to the first beam report information;
at least one beam measurement result;
capability information of the terminal;
third indication information, where the third indication information is used to indicate beam range information; or
a semi-persistent channel state information CSI reporting configuration identifier.

Optionally, the first processing module is configured to:
map the first beam report information to a first uplink resource for transmission; or
report the first beam report information to a media access control MAC layer, assemble and generate, by the MAC layer, a first media access control control element MAC CE, map the first MAC CE to a first transmission channel and generate a MAC protocol data unit PDU, and then map the MAC PDU to the first uplink resource for transmission.

Optionally, the first uplink resource includes at least one of the following:
a physical uplink control channel PUCCH scheduling request SR dedicated to triggering and reporting by the terminal;
a PUCCH;
a physical uplink shared channel PUSCH;
an available uplink scheduling UL grant;
a configured grant associated with a target RS, where the target RS is an RS corresponding to a best first measurement result; or
a random access channel RACH.

Optionally, the apparatus in this embodiment of this application further includes:
a sending module, configured to send fourth indication information on a second uplink resource, where the fourth indication information is used to indicate the first uplink resource.

Optionally, the fourth indication information includes at least one of the following:
uplink resource indication identifier information;
time domain indication information, where the time domain indication information is used to indicate time domain information of the first uplink resource; or
frequency domain indication information, where the frequency domain indication information is used to indicate frequency domain information of the first uplink resource.

Optionally, the first processing module is configured to:
mapping, to the first uplink resources for transmission based on a first priority rule, first beam report information associated with a plurality of pieces of target reporting configuration information when a first beam measurement result corresponding to a measurement resource in measurement configuration information associated with the plurality of pieces of target reporting configuration information satisfies a reporting condition, and the first uplink resources indicated in the plurality of pieces of target reporting configuration information overlap, where
the first priority rule is related to at least one of the following:
   a configuration identifier of each of the pieces of target reporting configuration information;
   a reporting condition configured in the target reporting configuration information;
   reporting content configured in the target reporting configuration information; or
   an identifier of a serving cell in which the target reporting configuration is located.

Optionally, the first processing module is configured to:
map the first MAC CE to the first transmission channel and generate the MAC PDU based on a second priority rule, where
the second priority rule includes at least one of the following:
   the first MAC CE has a lower priority than a MAC CE carrying a cell radio network temporary identifier C-RNTI;
   the first MAC CE has a lower priority than data transmitted on an uplink control channel UL-CCH;
   the first MAC CE has a higher priority than a MAC CE for side link configured grant confirmation; or
   a priority of the first MAC CE is not lower than a priority of a second MAC CE, and the second MAC CE includes at least one of a MAC CE for beam failure recovery, a MAC CE for configured grant confirmation, or a MAC CE for multiple entry configured grant confirmation.

Optionally, the first processing module is configured to:
perform, based on a preset rule, beam reporting processing when the terminal is configured with first beam reporting and second beam reporting and a first uplink resource overlaps with a third uplink resource, where the first beam reporting is beam reporting triggered based on the reporting condition, and the second beam reporting is periodic, semi-persistent, or aperiodic beam reporting configured or triggered by a network.

The preset rule includes at least one of the following:
the terminal reports the first beam report information or second beam report information when the first beam report information is the same as the second beam report information, and the first beam report information is reported through uplink control information UCI;
the terminal reports the second beam report information, or the terminal reports the first beam report information and the second beam report information when the first beam report information is the same as the second beam report information, and the first beam report information is reported through the MAC CE;
the terminal reports, based on a preset priority rule, third beam report information when the first beam report information is different from the second beam report information, and the first beam report information is reported through the uplink control information UCI, where the third beam report information is one of the first beam report information and the second beam report information that has a higher priority; or
the terminal reports the first beam report information and the second beam report information when the first beam report information is different from the second beam report information, and the first beam report information is reported through the MAC CE, where
the first beam report information is beam report information corresponding to the first beam reporting, the second beam report information is beam report information corresponding to the second beam reporting, the first uplink resource is an uplink resource for transmitting the first beam report information, and the third uplink resource is an uplink resource for transmission of the second beam report information.

Optionally, the apparatus in this embodiment of this application further includes:
a second determining module, configured to determine a start position of a CPU occupation time corresponding to the first beam report based on at least one of the following:
a first symbol of a reference signal with an earliest time domain resource among all measurement resources corresponding to the target measurement configuration information associated with the first beam report; or
the first symbol of the reference signal with the earliest time domain resource among the measurement resources corresponding to the target measurement configuration information associated with the first beam report, where the measurement resource corresponding to the target measurement configuration information is a measurement resource for candidate beam detection; and
the first beam report is a beam report corresponding to the first beam report information.

Optionally, the apparatus in this embodiment of this application further includes:
a second processing module, configured to perform at least one of the following:
performing beam measurement on a second RS to obtain a second beam measurement result, and reporting the second beam measurement result on a fourth uplink resource; or
sending a sounding reference signal SRS on a fifth uplink resource.

In embodiments of this application, the first information is obtained. The first information includes at least one piece of reporting configuration information and at least one piece of measurement configuration information. The terminal performs beam measurement on the measurement resource corresponding to the target measurement configuration information, to obtain the first beam measurement result. The terminal determines first beam report information when the first beam measurement result satisfies the reporting condition. The terminal performs beam reporting processing based on the first beam report information. Through the foregoing solution, the terminal determines the first beam report information and performs beam reporting processing when the first beam measurement result satisfies the reporting condition. In other words, the terminal triggers beam reporting processing, and does not need to periodically report the beam quality frequently, thereby greatly reducing beam reporting overheads while ensuring real-time tracking and updating of the beam.

The information transmission apparatus in embodiments of this application may be an electronic device, for example, an electronic device having an operating system, or may be a component in the electronic device, for example, an integrated circuit or a chip. The electronic device may be a terminal, or may be another device other than the terminal. For example, the terminal may include but is not limited to the foregoing listed types of the terminal 11. The another device may be a server, a network attached storage (Network Attached Storage, NAS), or the like, which is not specifically limited in embodiments of this application.

The information transmission apparatus provided in embodiments of this application can implement each process implemented in the method embodiment of FIG. 2 to FIG. 4, and achieve the same technical effect. To avoid repetition, details are not described herein again.

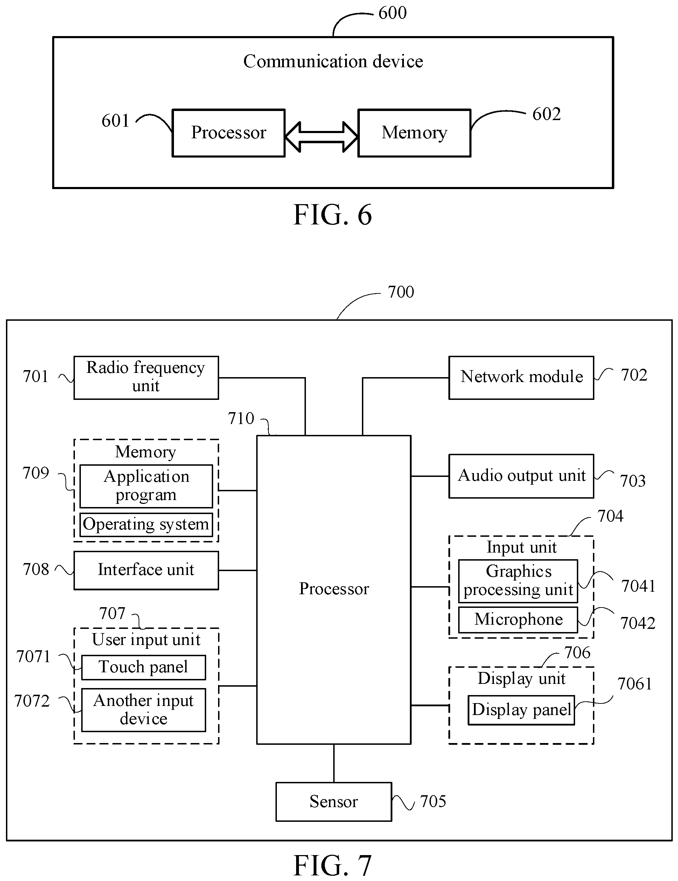

Optionally, as shown in FIG. 6, an embodiment of this application further provides a communication device 600, including a processor 601 and a memory 602. The memory 602 stores a program or an instruction executable in the processor 601. For example, when the communication device 600 is a terminal, the program or the instruction, when executed by the processor 601, implements the steps in the foregoing embodiments of the information transmission method, and can achieve the same technical effect. To avoid repetition, details are not described herein again.

An embodiment of this application further provides a terminal, including a processor and a communication interface. The communication interface is configured to obtain first information. The first information includes at least one piece of reporting configuration information and at least one piece of measurement configuration information. The processor is configured to: perform beam measurement on a measurement resource corresponding to target measurement configuration information, to obtain a first beam measurement result, where the target measurement configuration information is one of the at least one piece of measurement configuration information associated with target reporting configuration information, and the target reporting configuration information is one of the at least one piece of reporting configuration information; determine first beam report information when the first beam measurement result satisfies a reporting condition; and perform beam reporting processing based on the first beam report information. The reporting condition includes at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, where M1 is a positive integer;
a quantity of times the first measurement result of the first RS in the second measurement resource set is greater than or equal to a fourth threshold is not less than M2 within a second preset time period, where M2 is a positive integer;
a quantity of times the first measurement result of the first RS in the first measurement resource set is less than or equal to the first measurement result of the first RS in the second measurement resource set is not less than M3 within a third preset time period, where M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, where
at least one of the first measurement resource set and the second measurement resource set is a measurement resource set in the target measurement configuration information.

The terminal embodiment corresponds to the foregoing method embodiment of the terminal side. The implementation processes and implementations of the foregoing method embodiment are all applicable to the terminal embodiment, and can achieve the same technical effect. Specifically, FIG. 7 is a schematic diagram of a hardware structure of a terminal for implementing an embodiment of this application.

A terminal 700 includes, but is not limited to, at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) that supplies power to the components. The power supply may be logically connected to the processor 710 through a power management system, thereby implementing functions such as management of charging, discharging, and power consumption through the power management system. The terminal structure shown in FIG. 7 constitutes no limitation on the terminal, and the terminal may include more or fewer components than those shown in the figure, or some merged components, or different component arrangements. Details are not described herein again.

It should be noted that in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061. The display panel 7061 may be configured in a form such as a liquid crystal display or an organic light-emitting diode. The user input unit 707 includes at least one of a touch panel 7071 or another input device 7072. The touch panel 7071 is also referred to as a touchscreen. The touch panel 7071 may include two parts: a touch detection apparatus and a touch controller. The another input device 7072 may include but is not limited to a physical keyboard, a function button (for example, a volume control button or a power button), a trackball, a mouse, and a joystick. Details are not described herein again.

In this embodiment of this application, the radio frequency unit 701 receives downlink data from a network side device and may provide the downlink data to the processor 710 for processing. In addition, the radio frequency unit 701 may send uplink data to the network side device. Generally, the radio frequency unit 701 includes but is not limited to an antenna, an amplifier, a transceiver, a coupler, a low noise amplifier, a duplexer, and the like.

The memory 709 may be configured to store a software program or an instruction and various data. The memory 709 may mainly include a first storage area for storing a program or an instruction and a second storage area for storing data. The first storage area may store an operating system, an application program or an instruction required for at least one function (such as a sound playback function and an image playback function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in this embodiment of this application includes, but is not limited to, these memories and any other suitable types of memories.

The processor 710 may include one or more processing units. Optionally, an application processor and a modem processor are integrated into the processor 710. The application processor mainly processes operations related to an operating system, a user interface, an application program, and the like. The modem processor mainly processes a wireless communication signal, such as a baseband processor. It may be understood that the foregoing modem processor may alternatively not be integrated into the processor 710.

The radio frequency unit 701 is configured to obtain first information, where the first information includes at least one piece of reporting configuration information and at least one piece of measurement configuration information.

The processor 710 is configured to: perform beam measurement on a measurement resource corresponding to target measurement configuration information, to obtain a first beam measurement result, where the target measurement configuration information is one of the at least one piece of measurement configuration information associated with target reporting configuration information, and the target reporting configuration information is one of the at least one piece of reporting configuration information; and determine first beam report information when the first beam measurement result satisfies a reporting condition.

The radio frequency unit 701 is configured to perform beam reporting processing based on the first beam report information.

The reporting condition includes at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, where M1 is a positive integer;
a quantity of times the first measurement result of the first RS in the second measurement resource set is greater than or equal to a fourth threshold is not less than M2 within a second preset time period, where M2 is a positive integer;
a quantity of times the first measurement result of the first RS in the first measurement resource set is less than or equal to the first measurement result of the first RS in the second measurement resource set is not less than M3 within a third preset time period, where M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, where
at least one of the first measurement resource set and the second measurement resource set is a measurement resource set in the target measurement configuration information.

Optionally, the first measurement resource set and the second measurement resource set each include at least one RS, and the RS in the first measurement resource set and the second measurement resource set is determined through at least one of the following:
a quasi co-location QCL source reference signal of a transmission configuration indicator TCI state that is activated or indicated by a network;
a QCL source reference signal of a demodulation reference signal of a physical downlink control channel;
an RS explicitly configured by the network; or
an RS stipulated through a protocol or an RS determined through a default rule.

Optionally, the RS in the first measurement resource set and the RS in the second measurement resource set are associated with different cells; or
the first measurement resource set and the second measurement resource set are associated with different cells.

Optionally, the first RS includes at least one of the following:
K RSs in the measurement resource set that have highest or lowest first measurement results, where K is a positive integer;
P RSs in the measurement resource set that have minimum or maximum indexes, where P is a positive integer; or
all of the RSs in the measurement resource set.

Optionally, the first measurement result includes at least one of the following:
a maximum value or a minimum value of a measurement quantity of the first RS within a seventh preset time period; or
a linear average value of the measurement quantity of the first RS within the seventh preset time period.

Optionally, the first beam report information includes at least one of the following:
first indication information, where the first indication information is used to indicate whether to perform beam measurement or beam switching;
second indication information, where the second indication information is used to indicate a reporting condition that needs to be satisfied to trigger reporting of a first beam report, and the first beam report is a beam report corresponding to the first beam report information;
at least one beam measurement result;
capability information of the terminal;
third indication information, where the third indication information is used to indicate beam range information; or
a semi-persistent channel state information CSI reporting configuration identifier.

Optionally, the processor 710 is further configured to perform one of the following:
mapping the first beam report information to a first uplink resource for transmission; or
reporting the first beam report information to a media access control MAC layer, assembling and generating, by the MAC layer, a first media access control control element MAC CE, mapping the first MAC CE to a first transmission channel and generating a MAC protocol data unit PDU, and then mapping the MAC PDU to the first uplink resource for transmission.

Optionally, the first uplink resource includes at least one of the following:
a physical uplink control channel PUCCH scheduling request SR dedicated to triggering and reporting by the terminal;
a PUCCH;
a physical uplink shared channel PUSCH;
an available uplink scheduling UL grant;
a configured grant associated with a target RS, where the target RS is an RS corresponding to a best first measurement result; or
a random access channel RACH.

Optionally, the radio frequency unit 701 is further configured to:
send fourth indication information on a second uplink resource, where the fourth indication information is used to indicate the first uplink resource.

Optionally, the fourth indication information includes at least one of the following:
uplink resource indication identifier information;
time domain indication information, where the time domain indication information is used to indicate time domain information of the first uplink resource; or
frequency domain indication information, where the frequency domain indication information is used to indicate frequency domain information of the first uplink resource.

Optionally, the processor 710 is further configured to:
map, to the first uplink resources for transmission based on a first priority rule, first beam report information associated with a plurality of pieces of target reporting configuration information when a first beam measurement result corresponding to a measurement resource in measurement configuration information associated with the plurality of pieces of target reporting configuration information satisfies a reporting condition, and the first uplink resources indicated in the plurality of pieces of target reporting configuration information overlap, where
the first priority rule is related to at least one of the following:
   a configuration identifier of each of the pieces of target reporting configuration information;
   a reporting condition configured in the target reporting configuration information;
   reporting content configured in the target reporting configuration information; or
   an identifier of a serving cell in which the target reporting configuration is located.

Optionally, the processor 710 is further configured to:
map the first MAC CE to the first transmission channel and generate the MAC PDU based on a second priority rule, where
the second priority rule includes at least one of the following:
   the first MAC CE has a lower priority than a MAC CE carrying a cell radio network temporary identifier C-RNTI;
   the first MAC CE has a lower priority than data transmitted on an uplink control channel UL-CCH;
   the first MAC CE has a higher priority than a MAC CE for side link configured grant confirmation; or
   a priority of the first MAC CE is not lower than a priority of a second MAC CE, and the second MAC CE includes at least one of a MAC CE for beam failure recovery, a MAC CE for configured grant confirmation, or a MAC CE for multiple entry configured grant confirmation.

Optionally, the processor 710 is further configured to:
perform, based on a preset rule, beam reporting processing when the terminal is configured with first beam reporting and second beam reporting and a first uplink resource overlaps with a third uplink resource, where the first beam reporting is beam reporting triggered based on the reporting condition, and the second beam reporting is periodic, semi-persistent, or aperiodic beam reporting configured or triggered by a network.

The preset rule includes at least one of the following:
the terminal reports the first beam report information or second beam report information when the first beam report information is the same as the second beam report information, and the first beam report information is reported through uplink control information UCI;
the terminal reports the second beam report information, or the terminal reports the first beam report information and the second beam report information when the first beam report information is the same as the second beam report information, and the first beam report information is reported through the MAC CE;
the terminal reports, based on a preset priority rule, third beam report information when the first beam report information is different from the second beam report information, and the first beam report information is reported through the uplink control information UCI, where the third beam report information is one of the first beam report information and the second beam report information that has a higher priority; or
the terminal reports the first beam report information and the second beam report information when the first beam report information is different from the second beam report information, and the first beam report information is reported through the MAC CE, where
the first beam report information is beam report information corresponding to the first beam reporting, the second beam report information is beam report information corresponding to the second beam reporting, the first uplink resource is an uplink resource for transmitting the first beam report information, and the third uplink resource is an uplink resource for transmission of the second beam report information.

Optionally, the processor 710 is further configured to:
determine a start position of a CPU occupation time corresponding to the first beam report based on at least one of the following:
a first symbol of a reference signal with an earliest time domain resource among all measurement resources corresponding to the target measurement configuration information associated with the first beam report; or
the first symbol of the reference signal with the earliest time domain resource among the measurement resources corresponding to the target measurement configuration information associated with the first beam report, where the measurement resource corresponding to the target measurement configuration information is a measurement resource for candidate beam detection; and
the first beam report is a beam report corresponding to the first beam report information.

Optionally, the processor 710 is further configured to perform at least one of the following:
performing beam measurement on a second RS to obtain a second beam measurement result, and reporting the second beam measurement result on a fourth uplink resource; or
sending a sounding reference signal SRS on a fifth uplink resource.

In embodiments of this application, the terminal obtains the first information. The first information includes at least one piece of reporting configuration information and at least one piece of measurement configuration information. The terminal performs beam measurement on the measurement resource corresponding to the target measurement configuration information, to obtain the first beam measurement result. The terminal determines first beam report information when the first beam measurement result satisfies the reporting condition. The terminal performs beam reporting processing based on the first beam report information. Through the foregoing solution, the terminal determines the first beam report information and performs beam reporting processing when the first beam measurement result satisfies the reporting condition. In other words, the terminal triggers beam reporting processing, and does not need to periodically report the beam quality frequently, thereby greatly reducing beam reporting overheads while ensuring real-time tracking and updating of the beam.

An embodiment of this application further provides a readable storage medium. The readable storage medium stores a program or an instruction. The program or the instruction, when executed by a processor, implements the processes of the foregoing embodiments of the information transmission method, and can achieve the same technical effect. To avoid repetition, details are not described herein again.

The processor may be a processor of the terminal in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or an instruction, to implement the processes of the foregoing embodiments of the information transmission method, and can achieve the same technical effect. To avoid repetition, details are not described herein again.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of embodiments of the foregoing information transmission method, and can achieve the same technical effect. To avoid repetition, details are not described herein again.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by a phrase "include one ..." does not exclude existence of an additional same element in the process, the method, the article, or the apparatus that includes the element. In addition, it should be noted that the scope of the method and the apparatus in embodiments of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the foregoing implementations, a person skilled in the art may clearly learn that the method in the foregoing embodiments may be implemented by a computer software product with a necessary universal hardware platform, or may be implemented by hardware. The computer software product is stored in a storage medium (for example, a ROM, a RAM, a magnetic disk, or an optical disc) and includes several instructions, to enable the terminal or the network side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. An information transmission method, comprising:
obtaining, by a terminal, first information, wherein the first information comprises at least one piece of reporting configuration information and at least one piece of measurement configuration information;
performing, by the terminal, beam measurement on a measurement resource corresponding to target measurement configuration information, to obtain a first beam measurement result, wherein the target measurement configuration information is one of the at least one piece of measurement configuration information associated with target reporting configuration information, and the target reporting configuration information is one of the at least one piece of reporting configuration information;
determining, by the terminal, first beam report information when the first beam measurement result satisfies a reporting condition; and
performing, by the terminal, beam reporting processing based on the first beam report information, wherein
the reporting condition comprises at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, wherein M1 is a positive integer;
a quantity of times the first measurement result of the first RS in the second measurement resource set is greater than or equal to a fourth threshold is not less than M2 within a second preset time period, wherein M2 is a positive integer;
a quantity of times the first measurement result of the first RS in the first measurement resource set is less than or equal to the first measurement result of the first RS in the second measurement resource set is not less than M3 within a third preset time period, wherein M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, wherein
at least one of the first measurement resource set and the second measurement resource set is a measurement resource set in the target measurement configuration information.

2. The method according to claim 1, wherein the first measurement resource set and the second measurement resource set each comprise at least one RS, and the RS in the first measurement resource set and the second measurement resource set is determined through at least one of the following:
a quasi co-location QCL source reference signal of a transmission configuration indicator TCI state that is activated or indicated by a network;
a QCL source reference signal of a demodulation reference signal of a physical downlink control channel;
an RS explicitly configured by the network; or
an RS stipulated through a protocol or an RS determined through a default rule.

3. The method according to claim 1 or 2, wherein the RS in the first measurement resource set and the RS in the second measurement resource set are associated with different cells; or
the first measurement resource set and the second measurement resource set are associated with different cells.

4. The method according to any one of claims 1 to 3, wherein the first RS comprises at least one of the following:
K RSs in the measurement resource set that have highest or lowest first measurement results, wherein K is a positive integer;
P RSs in the measurement resource set that have minimum or maximum indexes, wherein P is a positive integer; or
all of the RSs in the measurement resource set.

5. The method according to any one of claims 1 to 4, wherein the first measurement result comprises at least one of the following:
a maximum value or a minimum value of a measurement quantity of the first RS within a seventh preset time period; or
a linear average value of the measurement quantity of the first RS within the seventh preset time period.

6. The method according to any one of claims 1 to 5, wherein the first beam report information comprises at least one of the following:
first indication information, wherein the first indication information is used to indicate whether to perform beam measurement or beam switching;
second indication information, wherein the second indication information is used to indicate a reporting condition that needs to be satisfied to trigger reporting of a first beam report, and the first beam report is a beam report corresponding to the first beam report information;
at least one beam measurement result;
capability information of the terminal;
third indication information, wherein the third indication information is used to indicate beam range information; or
a semi-persistent channel state information CSI reporting configuration identifier.

7. The method according to claim 1, wherein the performing, by the terminal, beam reporting processing based on the first beam report information comprises any one of the following:
mapping the first beam report information to a first uplink resource for transmission; or
reporting the first beam report information to a media access control MAC layer, assembling and generating, by the MAC layer, a first media access control control element MAC CE, mapping the first MAC CE to a first transmission channel and generating a MAC protocol data unit PDU, and then mapping the MAC PDU to the first uplink resource for transmission.

8. The method according to claim 7, wherein the first uplink resource comprises at least one of the following:
a physical uplink control channel PUCCH scheduling request SR dedicated to triggering and reporting by the terminal;
a PUCCH;
a physical uplink shared channel PUSCH;
an available uplink scheduling UL grant;
a configured grant associated with a target RS, wherein the target RS is an RS corresponding to a best first measurement result; or
a random access channel RACH.

9. The method according to claim 7, further comprising:
sending fourth indication information on a second uplink resource, wherein the fourth indication information is used to indicate the first uplink resource.

10. The method according to claim 9, wherein the fourth indication information comprises at least one of the following:
uplink resource indication identifier information;
time domain indication information, wherein the time domain indication information is used to indicate time domain information of the first uplink resource; or
frequency domain indication information, wherein the frequency domain indication information is used to indicate frequency domain information of the first uplink resource.

11. The method according to any one of claims 6 to 10, wherein the mapping the first beam report information to a first uplink resource for transmission comprises:
mapping, to the first uplink resources for transmission based on a first priority rule, first beam report information associated with a plurality of pieces of target reporting configuration information when a first beam measurement result corresponding to a measurement resource in measurement configuration information associated with the plurality of pieces of target reporting configuration information satisfies a reporting condition, and the first uplink resources indicated in the plurality of pieces of target reporting configuration information overlap, wherein
the first priority rule is related to at least one of the following:
a configuration identifier of each of the pieces of target reporting configuration information;
a reporting condition configured in the target reporting configuration information;
reporting content configured in the target reporting configuration information; or
an identifier of a serving cell in which the target reporting configuration is located.

12. The method according to claim 6, wherein the mapping the first MAC CE to a first transmission channel and generating a MAC PDU comprises:
mapping the first MAC CE to the first transmission channel and generating the MAC PDU based on a second priority rule, wherein
the second priority rule comprises at least one of the following:
the first MAC CE has a lower priority than a MAC CE carrying a cell radio network temporary identifier C-RNTI;
the first MAC CE has a lower priority than data transmitted on an uplink control channel UL-CCH;
the first MAC CE has a higher priority than a MAC CE for side link configured grant confirmation; or
a priority of the first MAC CE is not lower than a priority of a second MAC CE, and the second MAC CE comprises at least one of a MAC CE for beam failure recovery, a MAC CE for configured grant confirmation, or a MAC CE for multiple entry configured grant confirmation.

13. The method according to claim 1, wherein the performing, by the terminal, beam reporting processing based on the first beam report information comprises:
performing, by the terminal based on a preset rule, beam reporting processing when the terminal is configured with first beam reporting and second beam reporting and a first uplink resource overlaps with a third uplink resource, wherein the first beam reporting is beam reporting triggered based on the reporting condition, and the second beam reporting is periodic, semi-persistent, or aperiodic beam reporting configured or triggered by a network; and
the preset rule comprises at least one of the following:
reporting, by the terminal, the first beam report information or second beam report information when the first beam report information is the same as the second beam report information, and the first beam report information is reported through uplink control information UCI;
reporting, by the terminal, the second beam report information, or reporting, by the terminal, the first beam report information and the second beam report information when the first beam report information is the same as the second beam report information, and the first beam report information is reported through the MAC CE;
reporting, by the terminal based on a preset priority rule, third beam report information when the first beam report information is different from the second beam report information, and the first beam report information is reported through the uplink control information UCI, wherein the third beam report information is one of the first beam report information and the second beam report information that has a higher priority; or
reporting, by the terminal, the first beam report information and the second beam report information when the first beam report information is different from the second beam report information, and the first beam report information is reported through the MAC CE, wherein
the first beam report information is beam report information corresponding to the first beam reporting, the second beam report information is beam report information corresponding to the second beam reporting, the first uplink resource is an uplink resource for transmitting the first beam report information, and the third uplink resource is an uplink resource for transmission of the second beam report information.

14. The method according to any one of claims 1 to 13, further comprising:
determining a start position of a CSI processing unit occupation time corresponding to the first beam report based on at least one of the following:
a first symbol of a reference signal with an earliest time domain resource among all measurement resources corresponding to the target measurement configuration information associated with the first beam report; or
the first symbol of the reference signal with the earliest time domain resource among the measurement resources corresponding to the target measurement configuration information associated with the first beam report, wherein the measurement resource corresponding to the target measurement configuration information is a measurement resource for candidate beam detection; and
the first beam report is a beam report corresponding to the first beam report information.

15. The method according to any one of claims 1 to 14, wherein after the performing, by the terminal, beam reporting processing based on the first beam report information, the method further comprises at least one of the following:
performing, by the terminal, beam measurement on a second RS to obtain a second beam measurement result, and reporting the second beam measurement result on a fourth uplink resource; or
sending a sounding reference signal SRS on a fifth uplink resource.

16. An information transmission apparatus, comprising:
a first obtaining module, configured to obtain first information, wherein the first information comprises at least one piece of reporting configuration information and at least one piece of measurement configuration information;
a second obtaining module, configured to perform beam measurement on a measurement resource corresponding to target measurement configuration information, to obtain a first beam measurement result, wherein the target measurement configuration information is one of the at least one piece of measurement configuration information associated with target reporting configuration information, and the target reporting configuration information is one of the at least one piece of reporting configuration information;
a first determining module, configured to determine first beam report information when the first beam measurement result satisfies a reporting condition; and
a first processing module, configured to perform beam reporting processing based on the first beam report information, wherein the reporting condition comprises at least one of the following:
a first measurement result of a first reference signal RS in a first measurement resource set is less than or equal to a first threshold;
a first measurement result of a first RS in a second measurement resource set is greater than or equal to a second threshold;
the first measurement result of the first RS in the first measurement resource set is less than or equal to the first measurement result of the first RS in the second measurement resource set;
a quantity of times the first measurement result of the first RS in the first measurement resource set is less than or equal to a third threshold is not less than M1 within a first preset time period, wherein M1 is a positive integer;
a quantity of times the first measurement result of the first RS in the second measurement resource set is greater than or equal to a fourth threshold is not less than M2 within a second preset time period, wherein M2 is a positive integer;
a quantity of times the first measurement result of the first RS in the first measurement resource set is less than or equal to the first measurement result of the first RS in the second measurement resource set is not less than M3 within a third preset time period, wherein M3 is a positive integer;
the first measurement result of the first RS in the first measurement resource set is less than or equal to a fifth threshold within a fourth preset time period;
a second measurement result of the first RS in the second measurement resource set is greater than or equal to a sixth threshold within a fifth preset time period; or
the first measurement result of the first RS in the first measurement resource set is less than or equal to the first measurement result of the first RS in the second measurement resource set within a sixth preset time period, wherein
at least one of the first measurement resource set and the second measurement resource set is a measurement resource set in the target measurement configuration information.

17. The apparatus according to claim 16, wherein the first measurement resource set and the second measurement resource set each comprise at least one RS, and the RS in the first measurement resource set and the second measurement resource set is determined through at least one of the following:
a quasi co-location QCL source reference signal of a transmission configuration indicator TCI state that is activated or indicated by a network;
a QCL source reference signal of a demodulation reference signal of a physical downlink control channel;
an RS explicitly configured by the network; or
an RS stipulated through a protocol or an RS determined through a default rule.

18. The apparatus according to claim 16 or 17, wherein the RS in the first measurement resource set and the RS in the second measurement resource set are associated with different cells; or
the first measurement resource set and the second measurement resource set are associated with different cells.

19. The apparatus according to any one of claims 16 to 18, wherein the first RS comprises at least one of the following:
K RSs in the measurement resource set that have highest or lowest first measurement results, wherein K is a positive integer;
P RSs in the measurement resource set that have minimum or maximum indexes, wherein P is a positive integer; or
all of the RSs in the measurement resource set.

20. The apparatus according to any one of claims 16 to 19, wherein the first measurement result comprises at least one of the following:
a maximum value or a minimum value of a measurement quantity of the first RS within a seventh preset time period; or
a linear average value of the measurement quantity of the first RS within the seventh preset time period.

21. The apparatus according to any one of claims 16 to 20, wherein the first beam report information comprises at least one of the following:
first indication information, wherein the first indication information is used to indicate whether to perform beam measurement or beam switching;
second indication information, wherein the second indication information is used to indicate a reporting condition that needs to be satisfied to trigger reporting of a first beam report, and the first beam report is a beam report corresponding to the first beam report information;
at least one beam measurement result;
capability information of the terminal;
third indication information, wherein the third indication information is used to indicate beam range information; or
a semi-persistent channel state information CSI reporting configuration identifier.

22. The apparatus according to claim 16, wherein the first processing module is configured to:
map the first beam report information to a first uplink resource for transmission; or
report the first beam report information to a media access control MAC layer, assemble and generate, by the MAC layer, a first media access control control element MAC CE, map the first MAC CE to a first transmission channel and generate a MAC protocol data unit PDU, and then map the MAC PDU to the first uplink resource for transmission.

23. The apparatus according to claim 22, wherein the first uplink resource comprises at least one of the following:
a physical uplink control channel PUCCH scheduling request SR dedicated to triggering and reporting by the terminal;
a PUCCH;
a physical uplink shared channel PUSCH;
an available uplink scheduling UL grant;
a configured grant associated with a target RS, wherein the target RS is an RS corresponding to a best first measurement result; or
a random access channel RACH.

24. The apparatus according to claim 22, further comprising:
a sending module, configured to send fourth indication information on a second uplink resource, wherein the fourth indication information is used to indicate the first uplink resource.

25. The apparatus according to claim 24, wherein the fourth indication information comprises at least one of the following:
uplink resource indication identifier information;
time domain indication information, wherein the time domain indication information is used to indicate time domain information of the first uplink resource; or
frequency domain indication information, wherein the frequency domain indication information is used to indicate frequency domain information of the first uplink resource.

26. The apparatus according to any one of claims 22 to 25, wherein the first processing module is configured to:
map, to the first uplink resources for transmission based on a first priority rule, first beam report information associated with a plurality of pieces of target reporting configuration information when a first beam measurement result corresponding to a measurement resource in measurement configuration information associated with the plurality of pieces of target reporting configuration information satisfies a reporting condition, and the first uplink resources indicated in the plurality of pieces of target reporting configuration information overlap, wherein
the first priority rule is related to at least one of the following:
a configuration identifier of each of the pieces of target reporting configuration information;
a reporting condition configured in the target reporting configuration information;
reporting content configured in the target reporting configuration information; or
an identifier of a serving cell in which the target reporting configuration is located.

27. The apparatus according to claim 22, wherein the first processing module is configured to:
map the first MAC CE to the first transmission channel and generate the MAC PDU based on a second priority rule, wherein
the second priority rule comprises at least one of the following:
the first MAC CE has a lower priority than a MAC CE carrying a cell radio network temporary identifier C-RNTI;
the first MAC CE has a lower priority than data transmitted on an uplink control channel UL-CCH;
the first MAC CE has a higher priority than a MAC CE for side link configured grant confirmation; or
a priority of the first MAC CE is not lower than a priority of a second MAC CE, and the second MAC CE comprises at least one of a MAC CE for beam failure recovery, a MAC CE for configured grant confirmation, or a MAC CE for multiple entry configured grant confirmation.

28. The apparatus according to claim 16, wherein the first processing module is configured to:
perform, based on a preset rule, beam reporting processing when the terminal is configured with first beam reporting and second beam reporting and a first uplink resource overlaps with a third uplink resource, wherein the first beam reporting is beam reporting triggered based on the reporting condition, and the second beam reporting is periodic, semi-persistent, or aperiodic beam reporting configured or triggered by a network; and
the preset rule comprises at least one of the following:
reporting, by the terminal, the first beam report information or second beam report information when the first beam report information is the same as the second beam report information, and the first beam report information is reported through uplink control information UCI;
reporting, by the terminal, the second beam report information, or reporting, by the terminal, the first beam report information and the second beam report information when the first beam report information is the same as the second beam report information, and the first beam report information is reported through the MAC CE;
reporting, by the terminal based on a preset priority rule, third beam report information when the first beam report information is different from the second beam report information, and the first beam report information is reported through the uplink control information UCI, wherein the third beam report information is one of the first beam report information and the second beam report information that has a higher priority; or
reporting, by the terminal, the first beam report information and the second beam report information when the first beam report information is different from the second beam report information, and the first beam report information is reported through the MAC CE, wherein
the first beam report information is beam report information corresponding to the first beam reporting, the second beam report information is beam report information corresponding to the second beam reporting, the first uplink resource is an uplink resource for transmitting the first beam report information, and the third uplink resource is an uplink resource for transmission of the second beam report information.

29. The apparatus according to any one of claims 16 to 28, further comprising:
a second determining module, configured to determine a start position of a CSI processing unit occupation time corresponding to the first beam report based on at least one of the following:
a first symbol of a reference signal with an earliest time domain resource among all measurement resources corresponding to the target measurement configuration information associated with the first beam report; or
the first symbol of the reference signal with the earliest time domain resource among the measurement resources corresponding to the target measurement configuration information associated with the first beam report, wherein the measurement resource corresponding to the target measurement configuration information is a measurement resource for candidate beam detection; and
the first beam report is a beam report corresponding to the first beam report information.

30. The apparatus according to any one of claims 16 to 29, further comprising:
a second processing module, configured to perform at least one of the following:
performing beam measurement on a second RS to obtain a second beam measurement result, and reporting the second beam measurement result on a fourth uplink resource; or
sending a sounding reference signal SRS on a fifth uplink resource.

31. A terminal, comprising a processor and a memory, wherein the memory stores a program or an instruction executable in the processor, and the program or the instruction, when executed by the processor, implements the steps of the information transmission method according to any one of claims 1 to 15.

32. A readable storage medium, storing a program or an instruction, wherein the program or the instruction, when executed by a processor, implements the steps of the information transmission method according to any one of claims 1 to 15.
